(19)

Europäisches
Patentamt
European
Patent Office
Office européen
des brevets

(11)  **EP 1 923 360 B1**

(12)  **EUROPEAN PATENT SPECIFICATION**

(45) Date of publication and mention
of the grant of the patent:
**29.08.2012  Bulletin 2012/35**

(51) Int Cl.:
***C03B 37/018*** (2006.01)

(21) Application number: **07021689.0**

(22) Date of filing: **08.11.2007**

(54) **Apparatus and method for carrying out a PCVD deposition process**

Vorrichtung und Verfahren zum Durchführen eines PCVD-Abscheidungsverfahrens

Appareil et procédé pour effectuer un processus de dépôt PCVD

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.11.2006  NL 1032867**

(43) Date of publication of application:
**21.05.2008  Bulletin 2008/21**

(73) Proprietor: **Draka Comteq B.V.**
**1083 HJ  Amsterdam (NL)**

(72) Inventors:
 • **Van Stralen, Mattheus Jacobus Nicolaas**
 **5045 DV Tilburg (NL)**

 • **Hartsuiker, Johannes Antoon**
 **5624 KL Eindhoven (NL)**
 • **Milicevic, Igor**
 **5707 PW Helmond (NL)**
 • **Linders Molthoff, Antonius**
 **Henricus Johannes Petrus Maria**
 **5581TZ Waalre (NL)**

(74) Representative: **Blokland, Arie et al**
**Algemeen Octrooi- en Merkenbureau**
**P.O. Box 645**
**5600 AP  Eindhoven (NL)**

(56) References cited:
**EP-A- 0 261 742      WO-A-03/086998**
**GB-A- 2 068 359      US-A- 4 714 589**
**US-A1- 2003 115 909  US-B1- 6 260 510**

## Description

The present invention relates to an apparatus for carrying out a PCVD deposition process, wherein one or more doped or undoped glass layers are coated onto the interior of a glass substrate tube, which apparatus comprises an applicator having an inner wall and an outer wall and a microwave guide which opens into the applicator, which applicator extends around a cylindrical axis and which is provided with a passage adjacent to the inner wall, through which the microwaves supplied via the microwave guide can exit, over which cylindrical axis the substrate tube can be positioned, whilst the applicator is fully surrounded by a furnace that extends over said cylindrical axis.

The present invention further relates to a method for manufacturing a preform, using such an apparatus.

One way of manufacturing an optical preform is the Plasma Chemical Vapour Deposition (PCVD) process, which is known from US patent No. 4,314,833 in the name of the present applicant. According to the process that is known therefrom, one or more doped or undoped glass layers are deposited onto the interior of a substrate tube, using a low-pressure plasma in the glass substrate tube. After the glass layers have been deposited onto the interior of the glass substrate tube, the glass substrate tube is subsequently contracted by heating into a solid rod. In a special embodiment, the solid rod may furthermore be externally provided with an additional amount of glass, for example by means of an external vapour deposition process or by using one or more preformed glass tubes, thus obtaining a composite preform. From the preform thus produced, one end of which is heated, optical fibres are obtained.

According to International application WO 99/35304 in the name of the present applicants, microwaves from a microwave generator are directed towards an applicator via a waveguide, which applicator surrounds a glass substrate tube. The applicator couples the high-frequency energy into the plasma. On one side of the substrate tube the doped or undoped reactive gases are supplied, after which a reaction takes place under the influence of the plasma, and doped or undoped glass layers are deposited onto the interior of the substrate tube. The other end of the substrate tube is connected to a vacuum pump, so that a reduced pressure is generated in the interior of the substrate, which reduced pressure generally comprises a pressure value ranging between 5 and 50 mbar. The applicator is moved reciprocally in the longitudinal direction of the substrate tube, as a result of which a thin glass layer is deposited onto the interior of the substrate tube with every stroke. The applicator and the substrate tube are generally surrounded by a furnace so as to maintain the substrate tube at a temperature of 900-1300 °C during the deposition process.

From European patent EP 1 550 640 in the name of the present applicants there is known an apparatus for carrying out a PCVD deposition process, wherein a choke having a specific length and width is centred around the cylindrical axis in the apparatus as referred to in the preamble of the present description and is annular in shape, which choke is positioned within the applicator. The dimensions of the choke have been selected to minimise the losses of high-frequency energy during the entire deposition process, which leads to efficient energy consumption.

From U.S. Pat. No. 6,901,775 there is known an apparatus for internally coating a substrate tube by means of a PCVD process, from which substrate tube a preform is made, wherein the gas delivery unit includes an insert, which is claimed to prevent a disturbance in the gas flow, which disturbance induces a standing wave of a certain period and amplitude in the gas flow. According to said US patent, said standing wave is in turn responsible for a given deposition within the internal region of the substrate tube, which deposition is characterised by a non-uniform thickness along the axial direction thereof. Said non-uniformity in the thickness of the deposition translates to non-uniformity in the external diameter of the preform, which is subsequently subjected to a contraction process, and the resultant optical fibre therefrom.

From WO 03/086998 in the name of the present applicants there is known a method and a device for manufacturing optical preforms, in which one or more layers of glass, doped or undoped, are deposited onto the internal surface of a hollow substrate tube, which deposition is effected by supplying one or more reactive gas mixtures of glass-forming compounds to the interior of the hollow substrate tube and subsequently generating a non-isothermal plasma in the hollow substrate tube, after which the hollow substrate tube, on the internal surface of which a plurality of layers of glass obtained by means of a deposition process are present, is subjected to a contraction process for the purpose of forming a massive rod.

An aspect of the present invention is to provide a glass substrate tube having vapour-deposited glass layers of essentially uniform thickness and an essentially uniform refractive index in the axial direction, which substrate tube is subsequently further processed into a solid rod via a contraction process. Finally, said solid rod is converted into an optical fibre via a number of processing steps.

Yet another aspect of the present invention is to provide an apparatus and a method for carrying out a PCVD deposition process, which apparatus is configured to minimise any disturbance of the microwave energy from the applicator, which disturbance adversely affects the optical performance of the preform eventually to be produced.

The present invention as referred to in the introduction is characterised in that the furnace is reciprocally movable with respect to the substrate tube along the longitudinal axis thereof, wherein the applicator (6) is movable within the furnace (5).

One or more of the above aspects are accomplished by using the present apparatus. After extensive research and visual observations of the microwave-activated plasma the present inventors have found that a non-uniform distribution of the microwave energy was observed, which was caused inter alia by dispersion or scattering of the microwave power. The present inventors assume, without wishing to be bound by such a theory, that part of the microwave power is reflected by conductive surfaces, for example the inner wall of the surrounding furnace, but also by semi-conductive surfaces. More in general it can be stated that microwaves are reflected at the moment a transition of materials takes place, viz. air-water, metal-plastic, air-ceramics and the like. Thus it is assumed that the resulting distribution of the microwaves relative to the applicator depends on the position of the applicator, causing so-called non-uniform microwave powers, which may result in in non-uniform temperatures and even multiple plasmas. The present inventors have found that by thus making the applicator as well as the furnace reciprocally movable with respect to the longitudinal axis of the substrate tube, the non-uniform microwave distribution during the PCVD process is weakened or even reduced to a minimum. The surprising result is that the refractive index value of the substrate tube thus obtained after internal deposition is substantially uniform along the length thereof. The present inventors have moreover found that the so-called cross-sectional surface area (CSA), calculated on the basis of the thickness of the vapour-deposited layers, of the substrate tube as a function of the axial position thereof is substantially uniform. The aforesaid cross-sectional area (CSA) can be calculated as follows:

$$csa = \frac{\pi}{4}\left(d_u^2 - d_i^2\right)$$

wherein

$d_u$ = external diameter layer x
$d_i$ = internal diameter layer x
CSA = cross-sectional surface area layer x

In a special embodiment it is preferable if the substrate tube is fixed or clamped in position in the apparatus on both ends thereof and the applicator and the furnace are movable along the longitudinal axis of the substrate tube. Such a construction is in particular advantageous because the existing PCVD equipment can be adapted in a simple manner. It is also possible to rotate the substrate tube during the deposition process or externally flush it with an inert gas so as to prevent deposition of furnace particles on the outer side of the substrate tube.

In order to realise a very effective operation of the present invention it is preferable if the distance over which the applicator is movable between a point of reversal located at the supply side and a point of reversal located at the discharge side of the substrate tube is selected so that the furnace will surround the applicator at all times. Said moving of the furnace may take place continuously, discontinuously or in steps. In other words, the applicator will be moved in such a manner during the deposition process that the furnace, which is likewise movable, will surround the applicator at all times, which means that the applicator cannot move outside the furnace. This means that the applicator, which is movable along the length of the substrate tube, will at all times be positioned within the furnace, which is movable along the length of the substrate tube as well. The deposition of glass layers takes place along the distance over which the applicator is moved. The substrate tube has a length greater than the sum of the length of the furnace and the "stroke" of the movable furnace. The reason for this is that both ends of the substrate tube are fixed in clamps which cannot withstand the high temperature that prevails in the furnace.

The applicator is preferably cylindrically symmetrical and annular in shape, comprising a resonator space which extends cylindrically symmetrically around the cylindrical axis and which is annular in shape, which resonator space comprises a slit which extends in a full circle around the cylindrical axis, through which slit the microwave energy from the microwave guide is transported, wherein more in particular the microwave guide opens into the resonator space.

To realise an optimum transfer of the microwave energy, it is preferable if the waveguide has a longitudinal axis which extends substantially perpendicularly to the cylindrical axis, which longitudinal axis does not intersect the slit or the passage, wherein more in particular the longitudinal axis does not divide the resonator space into two equal halves.

The present inventors have found that the applicator and the furnace may move in the same direction or in opposite directions along the length of the substrate tube.

In a specific embodiment it is preferable if the furnace moves in a stepwise movement along the length of the substrate tube. Said stepwise movement may be understood to comprise movement of the furnace to a location, for example at the discharge side of the substrate tube, maintaining this position for some time and subsequently returning the furnace to the original or other location, for example at the supply side of the substrate tube. This latter position is preferably maintained for some time as well, whereupon the furnace is moved to the location at the discharge side of the substrate tube again. It is also possible to have the furnace move in steps, for example from the supply side towards the discharge side, during which movement the furnace will thus be stationary for some time at specific positions along the length of the substrate tube, after which the furnace will continue on its way and be stopped again. According to such a velocity profile the furnace is moved reciprocally along the length of the substrate tube in steps, seen in time. The aforesaid cycle may be repeated during the entire deposition process or during part of the deposition process. The present inventors have found that the cycle time of the above-described movement of the furnace preferably ranges between 1 and 600 seconds. A value of more than 600 seconds will lead to disturbances in the profile, whilst a value of less than 1 second will lead to insufficient results regarding the intended uniformity of the CSA and the refractive index profile. In addition to that, a value of less than 1 second may lead to mechanical problems. In the embodiment that uses a furnace and applicator moving along the length of the substrate tube it is preferable if the ratio between the cycle time of the furnace and the cycle time of the applicator does not equal an integer. To determine the aforesaid ratio, the quotient of the longest cycle time and the shortest cycle time must be taken.

The movement of the furnace over the substrate tube preferably equals an uneven multiple of a quarter of the wavelength of the microwaves being used. In practice suitable microwaves have a frequency of, for example, 2.45 GHz, 890 MHz or 5.8 GHz. In practice distances of 3, 9, 15 cm and the like are particularly used. The term "movement" is to be understood the distance over which the furnace is moved in the longitudinal direction of the substrate tube.

According to another embodiment of the present method, the furnace is continuously moved between the two locations at the supply side and the discharge side of the substrate tube. It is preferable in that case if the distance over which the furnace is moved is an uneven multiple of a quarter of the wavelength of the microwaves being used. It is furthermore preferable if the quotient of the longest cycle time and the shortest cycle time does not equal an integer when comparing the cycle time of the furnace to the cycle time of the applicator. For practical reasons a rate of movement of the furnace of less than 5 cm/sec, in particular less than 1 cm/sec is used.

Although a moving furnace has been described so far, it is also possible in a specific embodiment to provide the furnace internally with parts or elements that move along the length of the substrate tube. In such an embodiment the furnace as such takes up a stationary position, whilst the parts or elements, preferably made of a metal, which are arranged concentrically around the substrate tube, are being moved in order to thus prevent a disturbance of the microwave energy along the length of the substrate tube, seen in time, during the deposition process.

According to another embodiment of the present invention, the substrate tube, including the connections as known to the skilled person, is movable with respect to the stationary furnace and applicator.

The term "movable along the longitudinal axis" as used herein is to be understood to be a movement along the length of the substrate tube, which movement can take place not only parallel to the substrate tube, seen in the longitudinal direction thereof, but also at a certain angle, for example from the upper side to the bottom side or from the front side to the rear side.

The present invention further relates to a method for manufacturing a preform, comprising the carrying out of a PCVD deposition process for depositing one or more doped or undoped glass layers onto the interior of a glass substrate tube, characterised in that the PCVD deposition is carried out by means of the apparatus as described in the foregoing, wherein the substrate tube is placed over the cylindrical axis, within the inner wall of the applicator, to which interior of said substrate tube glass-forming precursors are supplied, wherein the substrate tube and the applicator are essentially co-axial, and wherein the applicator and the furnace are moved reciprocally along a length of the substrate tube.

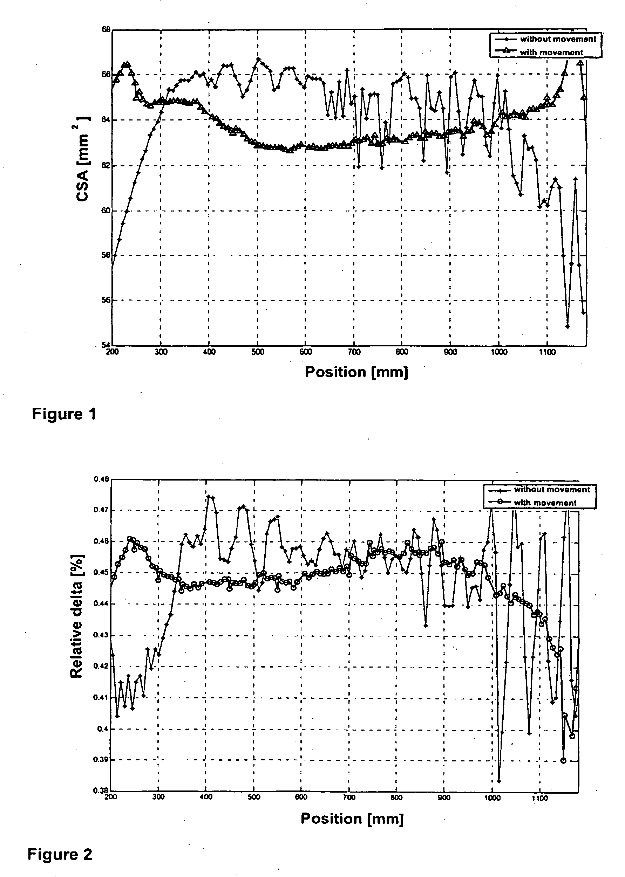

The present invention will now be explained on the basis of a number of examples, in which connection it should be noted, however, that the present invention is by no means limited to such special examples. The phrase "without movement" used with reference to figures 1 and 2 means without movement of the furnace during the deposition process, and consequently does not form part of the invention.

Figure 1 shows the refractive index relative to pure silica of the core of a rod as a function of the axial position along the length of the preform.

Figure 2 shows the cross-sectional surface area (CSA) of a core of a rod as a function of the axial position along the length of the preform.

Figure 3 shows the apparatus according to the present invention for carrying out a PCVD deposition process.

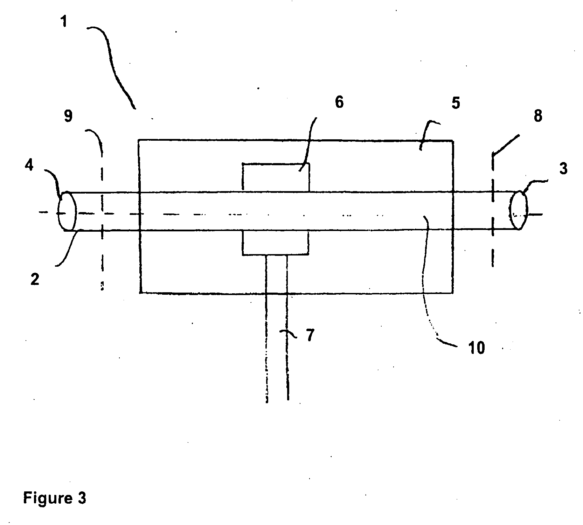

In Figure 3 a PCVD apparatus 1 is shown, wherein a glass substrate tube 2 is positioned over a cylindrical axis 10. Glass substrate tube 2 is provided with a supply side 4 on its left end and a discharge side 3 on its right end, wherein glass forming precursors are supplied to the interior of the substrate tube 2 at supply side 4. Apparatus 1 comprises an applicator 6 having an inner wall and an outer wall and a microwave guide 7 for guiding microwaves, which microwave guide 7 opens into the applicator 6. The applicator 6 is surrounded by a furnace 5 that extends over the cylindrical axis 10. The applicator 6 is movable along said cylindrical axis 10 between a point of reversal located at the supply side 4 and a point of reversal located at the discharge side 3. During the deposition process the furnace 5 is also reciprocally movable with respect to the substrate tube 2 along the longitudinal axis thereof. This means that the furnace 5 is movable along the length of the substrate tube 2 between a location 9 at the supply side 4 of the substrate tube 2 as well as a location 8 at the discharge side 3 of the substrate tube 2. The applicator 6 will be moved in such a manner during the deposition process that the furnace 5, which is likewise movable between location 9 and location 8, will surround the applicator 6 at all times, which means that the applicator 6 cannot move outside the furnace 5. This means that the applicator 6, which is movable along the length of the substrate tube 2, will at all times be positioned within the furnace 5. The deposition of glass layers inside the glass substrate tube 2 takes place along the distance of which the applicator 6 is moved. The substrate tube 2 has a length greater than the sum of the length of the furnace 5 and the "stroke", i.e. the distance between location 9 and location 8, of the movable furnace 5.

(Comparative) Example 1

A PCVD process was carried out in a prior art PCVD apparatus comprising a stationary furnace, a stationary substrate tube and an applicator moving reciprocally over said substrate tube, during which process glass-forming precursors were supplied to the interior of the substrate tube. Under the conditions that prevailed in the interior of the substrate tube, concentric glass layers were deposited, using a usual applicator velocity of 20 m/min. After the deposition process had been terminated, the substrate tube thus obtained was subjected to a contraction process so as to obtain a solid rod. Figure 1 shows the refractive index relative to pure silica of the core of the rod as a function of the axial position. Figure 2 shows the Cross Sectional Surface Area (CSA) of the core of the rod thus obtained as a function of the axial position. Both figure 1 and figure 2 show that there is non-uniformity over the axial position of the glass rod. Such non-uniformity has an adverse effect on a number of quality parameters of the optical fibre obtained therefrom, such as the attenuation and the uniformity of the mode field width and bandwidth.

Example 2

The same PCVD apparatus as in Comparative Example 1 was used, with this difference that the furnace, like the applicator, was moved along the length of the substrate tube. The substrate tube thus obtained was formed into a solid rod in the same manner as in Comparative Example 1.

The solid rod thus obtained was subjected to a measurement, with Figure 1 showing the refractive index relative to pure silica of the core as a function of the axial position. Figure 2 shows the Cross Sectional Surface Area (CSA) of the core of the rod as a function of the axial position for the same rod. Both figure 1 and figure 2 show a uniform refractive index and a uniform CSA over a considerable length of the preform. It has appeared to be possible to reduce the non-uniformity to a minimum by moving the applicator as well as the furnace with respect to the substrate tube during the deposition process.

**Claims**

1. An apparatus (1) for carrying out a PCVD deposition process, wherein one or more doped or undoped glass layers are deposited onto the interior of a glass substrate tube (2) having a supply side (4) and a discharge side (3), which apparatus (1) comprises an applicator (6) having an inner wall and an outer wall and a microwave guide (7) for guiding microwaves, which microwave guide (7) opens into the applicator (6), with the applicator (6) extending around a cylindrical axis (10) and being provided with a passage adjacent to the inner wall, through which the microwaves supplied via the microwave guide (7) can exit, over which cylindrical axis (10) the glass substrate tube (2) is positionable, whilst the applicator (6) is surrounded by a furnace (5) that extends over said cylindrical axis (10), which applicator (6) is movable along said cylindrical axis (10) between a point (9) of reversal located at the supply side (4) and a point (8) of reversal located at the discharge side (3), **characterised in that** the furnace (5) is reciprocally movable with respect to the substrate tube (2) along the longitudinal axis thereof, wherein the applicator (6) is movable within the furnace (5).

2. An apparatus (1) according to claim 1, **characterised in that** the distance over which the applicator (6) is movable between a point (9) of reversal located at the supply side (4) and a point (8) of reversal located at the discharge side (3) of the substrate tube (2) is such that the furnace surrounds the applicator (6).

3. An apparatus (1) according to either one or both of the preceding claims, **characterised in that** the applicator (6) is cylindrically symmetrical and annular in shape, comprising a resonator space which extends cylindrically symmetrically around the cylindrical axis (10) and which is annular in shape, which resonator space comprises a slit which extends in a full circle around the cylindrical axis (10), through which slit the microwave energy from the microwave guide (7) is transported.

4. An apparatus (1) according to claim 3, **characterised in that** the microwave guide (7) opens into the resonator space.

5. An apparatus (1) according to any one or more of the claims 1-4, **characterised in that** the waveguide (7) has a longitudinal axis which extends substantially perpendicularly to the cylindrical axis (10), which longitudinal axis does not intersect the slit or the passage of the resonator space.

6. An apparatus (1) according to claims 3-5, **characterised in that** the longitudinal axis of the waveguide does not divide the resonator space into two equal halves.

7. A method for depositing one or more doped or undoped glass layers onto the interior of a glass substrate tube (2) by means of an apparatus (1) as defined in any one or more of the claims 1-6, wherein the substrate tube (2) is placed over the cylindrical axis (10), within the inner wall of the applicator (6), to which interior of said substrate tube (2) glass-forming precursors are supplied, whilst the applicator (6) is surrounded by a furnace (5) that extends over said cylindrical axis (10), wherein the substrate tube (2) and the applicator (6) are essentially coaxial, wherein the applicator (6) is moved reciprocally along a length of the substrate tube (2) during the deposition process and creates plasma conditions for forming glass layers on the interior surface of the glass substrate tube (2), **characterised in that** the furnace (5) is moved with respect to the substrate tube (2) along the longitudinal axis thereof during the deposition process, wherein the application (6) is movable within the furnace (5).

8. A method according to claim 7, **characterised in that** the distance over which the furnace is moved along the longitudinal axis of the substrate tube (2) is an uneven multiple of a quarter of the wavelength of the microwaves being used in the applicator (6).

9. A method according to either one or both of the claims 7-8, **characterised in that** the ratio between the cycle time of the oven and the cycle time of the applicator (6) does not equal an integer by which the longest cycle time is divided by the shortest cycle time.


**Patentansprüche**

1. Vorrichtung (1) zur Durchführung eines PCVD-Abscheidungsprozesses, bei dem eine oder mehrere dotierte oder undotierte Glasschichten auf die Innenseite eines Glassubstratrohrs (2) abgeschieden werden, das eine Zuströmseite (4) und eine Abströmseite (3) aufweist, wobei die Vorrichtung (1) einen Applikator (6) mit einer Innenwand und einer Außenwand und einen Mikrowellenleiter (7) zum Leiten von Mikrowellen umfasst, wobei der Mikrowellenleiter (7) in den Applikator (6) mündet, wobei sich der Applikator (6) um eine Zylinderachse (10) erstreckt und angrenzend an die Innenwand mit einem Durchgang versehen ist, durch den die über den Mikrowellenleiter (7) zugeführten Mikrowellen austreten können, wobei das Glassubstratrohr (2) über die Zylinderachse (10) positioniert werden kann, während der Applikator (6) von einem Ofen (5) umgeben ist, der sich über die Zylinderachse (10) erstreckt, wobei der Applikator (6) längs der Zylinderachse (10) zwischen einem an der Zuströmseite (4) liegenden Umkehrpunkt (9) und einem an der Abströmseite (3) liegenden Umkehrpunkt (8) bewegbar ist, **dadurch gekennzeichnet, dass** der Ofen (5) bezüglich des Substratrohrs (2) längs dessen Längsachse hin- und herbewegbar ist, wobei der Applikator (6) innerhalb des Ofens (5) bewegbar ist.

2. Vorrichtung (1) nach Anspruch 1, **dadurch gekennzeichnet, dass** die Strecke, über die der Applikator (6) zwischen einem an der Zuströmseite (4) liegenden Umkehrpunkt (9) und einem an der Abströmseite (3) des Substratrohrs (2) liegenden Umkehrpunkt (8) derart ist, dass der Ofen den Applikator (6) umgibt.

3. Vorrichtung (1) nach einem oder beiden der vorhergehenden Ansprüche, **dadurch gekennzeichnet, dass** der Applikator (6) zylindersymmetrisch und ringförmig ist und einen Resonatorraum umfasst, der sich zylindersymmetrisch um die Zylinderachse (10) erstreckt und ringförmig ist, wobei der Resonatorraum einen Schlitz umfasst, der in einem Vollkreis um die Zylinderachse (10) verläuft und durch den die Mikrowellenenergie aus dem Mikrowellenleiter (7) transportiert wird.

4. Vorrichtung (1) nach Anspruch 3, **dadurch gekennzeichnet, dass** der Mikrowellenleiter (7) in den Resonatorraum mündet.

5. Vorrichtung (1) nach einem oder mehreren der Ansprüche 1 bis 4, **dadurch gekennzeichnet, dass** der Wellenleiter (7) eine Längsachse hat, die sich im Wesentlichen senkrecht zur Zylinderachse (10) erstreckt, wobei die Längsachse den Schlitz bzw. den Durchgang des Resonatorraums nicht schneidet.

6. Vorrichtung (1) nach den Ansprüchen 3 bis 5, **dadurch gekennzeichnet, dass** die Längsachse des Wellenleiters den Resonatorraum nicht in zwei gleiche Hälften teilt.

7. Verfahren zur Abscheidung einer oder mehrerer dotierter oder undotierter Glasschichten auf die Innenseite eines Glassubstratrohrs (2) mittels einer Vorrichtung (1) nach einem oder mehreren der Ansprüche 1 bis 6, wobei das Substratrohr (2) innerhalb der Innenwand des Applikators (6) über der Zylinderachse (10) angeordnet wird, wobei in das Innere des Substratrohrs (2) glasbildende Vorläufer zugeführt werden, während der Applikator (6) von einem Ofen (5) umgeben ist, der sich über die Zylinderachse (10) erstreckt, wobei das Substratrohr (2) und der Applikator (6) im Wesentlichen koaxial sind, wobei der Applikator (6) während des Abscheidungsvorgangs entlang einer Länge des Substratrohrs (2) hin- und herbewegt wird und Plasmabedingungen zur Bildung von Glasschichten auf der Innenfläche des Glassubstratrohrs (2) schafft, **dadurch gekennzeichnet, dass** der Ofen (5) während des Abscheidungsvorgangs bezüglich des Substratrohrs (2) längs dessen Längsachse bewegt wird, wobei der Applikator (6) innerhalb des Ofens (5) bewegbar ist.

**8.** Verfahren nach Anspruch 7, **dadurch gekennzeichnet, dass** die Strecke, über die der Ofen längs der Längsachse des Substratrohrs (2) bewegt wird, ein ungeradzahliges Vielfaches eines Viertels der Wellenlänge der in dem Applikator (6) verwendeten Mikrowellen ist.

**9.** Verfahren nach einem oder beiden der Ansprüche 7 bis 8, **dadurch gekennzeichnet, dass** das Verhältnis zwischen der Zykluszeit des Ofens und der Zykluszeit des Applikators (6) nicht gleich einer ganzen Zahl ist, bei der die längste Zykluszeit durch die kürzeste Zykluszeit geteilt wird.

**Revendications**

**1.** Appareil (1) permettant d'effectuer un procédé de dépôt PCVD, dans lequel une ou plusieurs couches de verre dopé ou non dopé sont déposées à l'intérieur d'un tube de substrat en verre (2) comportant un côté amenée (4) et un côté évacuation (3), dans lequel l'appareil (1) comprend un applicateur (6) ayant une paroi interne et une paroi externe et un guide de micro-ondes (7) permettant de guider des micro-ondes, lequel guide de micro-ondes (7) s'ouvre dans l'applicateur (6), l'applicateur (6) s'étendant autour d'un axe cylindrique (10) et étant pourvu d'un passage adjacent à la paroi interne, à travers lequel les micro-ondes fournies via le guide de micro-ondes (7) peuvent sortir, sur lequel axe cylindrique (10), le tube de substrat en verre (2) peut être positionné, tandis que l'applicateur (6) est entouré par un four (5) qui s'étend sur ledit axe cylindrique (10), lequel applicateur (6) est déplaçable le long dudit axe cylindrique (10) entre un point (9) d'inversion situé sur le côté amenée (4) et un point (8) d'inversion situé sur le côté évacuation (3), **caractérisé en ce que** le four (5) est déplaçable en va-et-vient par rapport au tube de substrat (2) le long de son axe longitudinal, dans lequel l'applicateur (6) est déplaçable dans le four (5).

**2.** Appareil (1) selon la revendication 1, **caractérisé en ce que** la distance sur laquelle l'applicateur (6) est déplaçable entre un point (9) d'inversion situé sur le côté amenée (4) et un point (8) d'inversion situé sur le côté évacuation (3) du tube de substrat (2) est telle que le four entoure l'applicateur (6).

**3.** Appareil (1) selon l'une des revendications précédentes ou les deux, **caractérisé en ce que** l'applicateur (6) est symétrique de façon cylindrique et de forme annulaire, comprenant un espace de résonateur qui s'étend de façon cylindrique et symétrique autour de l'axe cylindrique (10) et qui est de forme annulaire, lequel espace de résonateur comprend une fente qui s'étend en un cercle complet autour de l'axe cylindrique (10), à travers laquelle fente, l'énergie à micro-ondes issue du guide de micro-ondes (7) est transportée.

**4.** Appareil (1) selon la revendication 3, **caractérisé en ce que** le guide de micro-ondes (7) s'ouvre dans l'espace de résonateur.

**5.** Appareil (1) selon l'une quelconque ou plusieurs des revendications 1 à 4, **caractérisé en ce que** le guide d'ondes (7) a un axe longitudinal qui s'étend de façon sensiblement perpendiculaire à l'axe cylindrique (10), lequel axe longitudinal ne croise pas la fente ou le passage de l'espace de résonateur.

**6.** Appareil (1) selon les revendications 3 à 5, **caractérisé en ce que** l'axe longitudinal du guide d'ondes ne divise pas l'espace de résonateur en deux moitiés égales.

**7.** Procédé permettant de déposer une ou plusieurs couches de verre dopé ou non dopé à l'intérieur d'un tube de substrat en verre (2) au moyen d'un appareil (1) tel que défini dans l'une quelconque ou plusieurs des revendications 1 à 6, dans lequel le tube de substrat (2) est placé sur l'axe cylindrique (10), dans la paroi interne de l'applicateur (6), auquel intérieur dudit tube de substrat (2) des précurseurs de formation de verre sont amenés, tandis que l'applicateur (6) est entouré par un four (5) qui s'étend sur ledit axe cylindrique (10), dans lequel le tube de substrat (2) et l'applicateur (6) sont essentiellement coaxiaux, dans lequel l'applicateur (6) est déplacé en va-et-vient sur une longueur du tube de substrat (2) pendant le procédé de dépôt et créé des conditions de plasma permettant de former des couches de verre sur la surface intérieure du tube de substrat en verre (2), **caractérisé en ce que** le four (5) est déplacé par rapport au tube de substrat (2) le long de son axe longitudinal pendant le procédé de dépôt, dans lequel l'applicateur (6) est déplaçable à l'intérieur du four (5).

**8.** Procédé selon la revendication 7, **caractérisé en ce que** la distance sur laquelle le four est déplacé le long de l'axe longitudinal du tube de substrat (2) est un multiple impair d'un quart de la longueur d'onde des micro-ondes qui sont utilisées dans l'applicateur (6).

**9.** Procédé selon l'une des revendications 7 et 8 ou les deux, **caractérisé en ce que** le rapport entre le temps de cycle du four et le temps de cycle de l'applicateur (6) n'égale pas un nombre entier par lequel le temps de cycle le plus long est divisé par le temps de cycle le plus court.

**Figure 1**

**Figure 2**

Figure 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4314833 A
- WO 9935304 A
- EP 1550640 A
- US 6901775 B
- WO 03086998 A